# EUROPÄISCHE PATENTANMELDUNG

(11) **EP 1 775 093 A2**
(43) Veröffentlichungstag der Anmeldung: **18.04.2007**
(21) Anmeldenummer: 06021409.5
(22) Anmeldetag: 12.10.2006
(51) Int. Cl.: B29C 44/12

(54) **Belag mit Noppenstruktur**

(30) Priorität: 13.10.2005 DE 102005049063
(71) Anmelder: Gebrüder Holzapfel GmbH & Co. KG, 37276 Meinhard-Frieda (DE)
(72) Erfinder: Derin, Martin C., 37308 Volkerode (DE)
(74) Vertreter: Schwabe - Sandmair - Marx

(57) **Zusammenfassung**

Die Erfindung betrifft einen Belag mit Noppenstruktur in Matten- oder Bahnform, umfassend:
e) einen als Maschenware oder Gewebe gebildeten Träger
f) und den Träger umhüllenden Kunststoffschaum,
g) der Zeilen von raupenförmigen Raupenstegen (1) und quer zu den Zeilen weisende Reihen von schlankeren Verbindungsstegen (2) bildet, zwischen denen Durchbrüche (3) verbleiben,
h) wobei die Raupenstege (1) jeweils zwischen benachbarten Verbindungsstegen (2) eine Einschnürung (5) aufweisen, die sich durchgehend von beiden Seiten über eine Ober- oder Unterseite des jeweiligen Raupenstegs (1) erstreckt.

## Beschreibung

Die Erfindung betrifft einen matten- oder bahnförmigen Belag für Böden, insbesondere Fußböden, Bade- und Duschwannen und -becken, oder andere Unterlagen. So kann es sich beispielsweise auch um einen Sitzbelag handeln. Der Belag ist im Besonderen für den Einsatz in Nassbereichen wie öffentlichen und privaten Bädern, Schwimmhallen und Saunabereichen, grundsätzlich jedoch auch als Bodenbelag für beispielsweise Fabrik- und Bürogebäude geeignet. In einer Spezialverwendung bildet der Belag eine Gastronomie-Abtropfmatte, die insbesondere im Nassbereich eines Tresens als Unterlage für gespülte oder generell nasse Gläser oder auch Geschirr und Besteck dienen kann. Eine derartige Verwendung ist selbstverständlich auch im Heimbereich möglich. Die Erfindung betrifft einen Belag als Fertigprodukt, insbesondere in Form einer Matte, beispielsweise eine Bade- oder Duschwanneneinlage, als mattenförmigen oder eher bahnförmigen Bodenbelag, aber auch als Halbfertigprodukt, nämlich als Bahnware, die insbesondere auf eine Rolle aufgewickelt sein kann.

Im privaten Bereich erfreuen sich Bade- und Duschwanneneinlagen großer Beliebtheit, da sie zum einen den Bade- oder Duschkomfort erhöhen, zum anderen aber auch wesentlich die Rutschgefahr und somit das Unfallrisiko mindern, besonders für ältere Menschen und Kleinkinder. Auch ausgelegt in Gängen oder am Beckenrand von öffentlichen Schwimmbädern tragen Bodenbeläge aus Kunststoff maßgeblich zur Reduzierung des Unfallrisikos bei. Die Rutschgefahr entsteht durch Feuchtigkeit auf glatten Flächen und erhöht sich drastisch bei Bildung von größeren Flächen stehenden Wassers, d. h. im Falle einer Wasserfilmbildung. Die zur Minderung der Rutschgefahr eingesetzten Kunststoffbeläge weisen durchbrochene Trittflächen auf, so dass eine Drainagewirkung erzielt wird und sich auf der Oberseite des jeweiligen Belags kein geschlossener Wasserfilm bilden kann. Das Kunststoffmaterial der Beläge ist im Allgemeinen geschäumt, um das Gewicht der Beläge zu reduzieren, ein angenehmes haptisches Gefühl zu erzielen und auch die Haftreibung zum Boden, auf dem der Kunststoffbelag aufliegt, zu erhöhen. Eine gute Drainage zwischen Ober- und Unterseite des Belags und eine ausreichende Haftung am Boden gewährleisten die Sicherheit gegen Ausrutschen.

Im Gebrauch bewährt haben sich die Kunststoffbeläge der Sympa-Nova^{®}-Reihe. Die Sympa-Nova^{®}-Beläge bestehen aus einem Kunststoffschaum, in dem ein Trägergewirk eingebettet ist. Die Grundstruktur des Belags ist entsprechend der Form des Trägergewirks gitterförmig mit Zeilen von raupenförmigen Raupenstegen und Reihen von demgegenüber schlankeren Verbindungsstegen. Zwischen den rechtwinklig zueinander weisenden Raupen- und Verbindungsstegen verbleiben Durchbrüche, durch die Wasser von einer Oberseite des Belags zum Boden abgeführt wird, um anschließend unter dem Belag abzufließen.

Es ist eine Aufgabe der Erfindung, einen Kunststoffbelag zu schaffen, der bei Einsatz in Nassbereichen die Rutschgefahr gegenüber am Markt befindlichen Belägen nochmals mindert.

Ein Belag, wie die Erfindung ihn betrifft, liegt als Fertigprodukt in Form einer Matte oder als bahnförmig langer Belag vor oder ist als Halbfertigprodukt noch Bahnware, die der weiteren Konfektionierung, insbesondere eines Zuschnitts, bedarf. Der Belag umfasst einen als Maschenware oder Gewebe gebildeten Träger und den Träger umhüllenden Kunststoffschaum. Den Kunststoffschaum kann ein Schutzlack umhüllen, um den Abrieb zu verringern. In bevorzugten Ausführungen besteht der Belag nur aus dem Träger, dem Kunststoffschaum und vorzugsweise dem Schutzlack sowie gegebenenfalls einem Aufdruck. Der Kunststoffschaum und der eingebettete Träger bilden Zeilen von raupenförmigen Raupenstegen und quer zu den Zeilen weisende Reihen von gegenüber den Raupenstegen schlankeren Verbindungsstegen. Die Raupen- und Verbindungsstege bilden eine gitterförmige Grundstruktur des Belags, d. h. eine Struktur erster Ordnung. Über die zwischen den Raupen- und Verbindungsstegen verbleibenden Durchbrüche wird das Wasser von der Oberseite des Belags abgeführt. Insoweit kann der erfindungsgemäße Belag insbesondere den Sympa-Nova^{®}-Belägen entsprechen. Die Raupenstege bilden zumindest einen überwiegenden Teil einer Auflagefläche für den Belag und einer Tritt-, Sitz- oder Liegefläche oder Stellfläche für Personen oder Gegenstände.

Nach der Erfindung sind die Raupenstege jedoch nicht einfach wie bei den Sympa-Nova^{®}-Belägen als im Wesentlichen einfach durchgehend schlanke Balken geformt, sondern weisen zwischen benachbarten Verbindungsstegen je eine Einschnürung auf, die sich durchgehend von beiden Seiten des jeweiligen Raupenstegs über dessen Ober- oder Unterseite erstreckt. Die Raupenstege werden je zwischen zwei benachbarten Verbindungsstegen auf diese Weise unterteilt und erhalten eine Noppenstruktur mit Noppen, die von ihren beiden begrenzenden Einschnürungen jeweils plateauartig erhaben aufragen. Die Noppenstruktur der Raupenstege bildet zu der genannten Gitterstruktur eine Struktur zweiter Ordnung. Über die Einschnürungen kann Wasser besonders leicht abströmen. Ebenso beeinflussen die Einschnürungen das Verdunstungsverhalten positiv, indem im Bereich des Belags nach dem Abfließen noch verbleibende Restfeuchte rascher als bei den bekannten Belägen verdunstet. Bemerkenswert ist in diesem Zusammenhang auch, dass die verbesserte Drainage und Verdunstung erzielt wird, obgleich der erfindungsgemäße Belag dem optischen Eindruck und haptischen Empfinden nach weniger als Gitter, sondern als Fläche wahrgenommen wird. Eingesetzt beispielsweise als Abtropfmatte im Gastronomiebereich bietet sie darauf abgestellten Gläsern einen kippsicheren Stand. Die Einschnürungen erleichtern außerdem ein Durchtrennen der Ware quer zu den Raupenstegen, was der Weiterverarbeitung von Bahnware zugute kommt.

Sind die Raupenstege an der Oberseite des Belags eingeschnürt, wird besonders sicher verhindert, dass sich auf den Raupenstegen Wasser sammeln kann, da derartiges Oberflächenwasser von jeder einzelnen Noppe in die beidseits angeordneten Einschnürungen und über die Einschnürungen in die Durchbrüche fließt. Sind die Raupenstege an der Unterseite des Belags eingeschnürt, kann Wasser vermehrt auch quer zu den Raupenstegen abfließen. Die Einschnürungen können nur an der Unterseite oder sowohl an der Unterseite als auch an der Oberseite gebildet sein, als völlig ausreichend und besonders vorteilhaft hat es sich aber herausgestellt, wenn die Raupenstege die Einschnürungen und die dadurch geformten Noppen nur an der Oberseite des Belags aufweisen.

Über den Belag als solchen hinaus hat die Erfindung auch ein Verfahren zu dessen Herstellung zum Gegenstand. Für die Herstellung wird ein Gewebe oder vorzugsweise eine Maschenware aus Zeilen bildenden ersten Fäden und Reihen bildenden zweiten Fäden als Träger verwendet. Die ersten Fäden und zweiten Fäden sind in ihren Kreuzungsbereichen vorzugsweise vermascht und bilden besonders bevorzugt ein Gewirk. Die ersten Fäden sind in Fadengruppen angeordnet. Jede der Fadengruppen besteht aus mehreren ersten Fäden, beispielsweise zwei oder drei Fäden. Die in Querrichtung der Fäden gemessenen Abstände sind innerhalb der Fadengruppen kleiner als von Fadengruppe zu Fadengruppe. Die Fadengruppen bilden bandförmige Zeilen. Innerhalb der Fadengruppen sind die Fäden vorzugsweise parallel voneinander beabstandet, wobei die Abstände zwischen den Fäden einer Gruppe kleiner sind als die Abstände zwischen den Fadengruppen. Die Fadengruppen und die zweiten Fäden bilden ein regelmäßiges Muster, vorzugsweise in Schachbrettform. Die ersten und zweiten Fäden können aus einem Naturmaterial bestehen, vorzugsweise bestehen sie jedoch aus Kunststoff, beispielsweise Polyester. Der Träger kann ein Gewicht insbesondere aus dem Bereich von 50-80 g/m² haben.

Auf das als Träger dienende Bahnmaterial wird ein pastöses Kunststoffmaterial aufgebracht. Die Kunststoffpaste ist insbesondere mit Blähmittel und vorzugsweise mit Weichmacher versetzt. Bevorzugt wird Weich-PVC verwendet. Der Weichmacheranteil der pastösen Masse beträgt zwischen 32 Gew.-% und 35 Gew.-%, ist also recht hoch, erzeugt aber andererseits noch nicht den Eindruck von Klebrigkeit. Der Weichmacheranteil liegt im Kunststoffschaum des fertigen Belags im gleichen bevorzugten Bereich. Der PVC-Anteil beträgt vorzugsweise wenigstens 45 Gew.-%. Der Füllstoffgrad beträgt vorzugsweise nur zwischen 10 und 16 Gew.-%, Füllstoffgrade bis 20 Gew.-% entsprechen jedoch ebenfalls noch bevorzugten Ausführungen. Als Kunststoffe für das Kunststoffschaummaterial kommen alternativ oder gegebenenfalls zusätzlich zu PVC auch PUR, Naturkautschuk, synthetischer Kautschuk, PMMA, (Styrol)acrylate, ungesättigte Polyester und generell auch weitere pastbare Thermoplaste in Betracht.

Der Kunststoff schlägt durch den Träger, so dass die pastöse Kunststoffmasse bereits bei dem Aufbringen den Träger zumindest im Wesentlichen umhüllt. Anschließend wird das pastöse Kunststoffmaterial in einem Ofen erwärmt und dadurch geschäumt. Bevorzugt wird es vor dem Schäumen in einer Vorstufe der Erwärmung angeliert und erst in einer nachgelagerten Stufe der Erwärmung bei einer höheren Temperatur geschäumt. Der Schäumungsprozess wird durch Kühlung kontrolliert abgebrochen. Nach dem Schäumvorgang und der Verfestigung wird der Kunststoffschaum an der Oberseite oder der Unterseite vorzugsweise mit einem Druck beaufschlagt und dadurch geglättet oder mit einer Prägung versehen, jedenfalls in einer dünnen Oberflächenschicht verdichtet. Er kann auch an beiden Seiten mit einer Prägung versehen werden. So kann der Belag an seiner Unterseite insbesondere mit einer Prägestruktur gemäß der EP 05 000 323.5 versehen sein.

Die Herstellung wird vorzugsweise kontinuierlich durchgeführt, indem der Träger als Bahnware von einer Rolle abgewickelt, über eine Auftragswalze geführt und nach Aufbringen des Kunststoffmaterials kontinuierlich durch einen Ofen gefördert und im Ofen geschäumt wird. Das kontinuierlich weiter geförderte Bahnmaterial wird durch kontrollierte Kühlung verfestigt und vorzugsweise ebenfalls kontinuierlich dem optionalen Glätt- oder Prägeprozess unterzogen. Anschließend wird ebenfalls noch kontinuierlich wie bevorzugt ein Schutzlack aufgebracht. Das nun als Bahnware vorliegende Belagmaterial kann unmittelbar zu einem Fertigprodukt konfektioniert oder vorzugsweise als Halbfertigprodukt wieder auf eine Rolle aufgewickelt werden, um die weitere Konfektionierung zu matten- oder bahnförmigen Belägen an einem anderen Ort vornehmen zu können. Der Ofen für den Schäumungsprozess kann mehrstufig, insbesondere zweistufig, gebildet sein, mit einem Ofeneingangsabschnitt, der für ein bevorzugtes Angelieren bei einer tieferen Temperatur betrieben wird als ein sich anschließender zweiter Ofenabschnitt, der bei einer für das Schäumen günstigen Temperatur betrieben wird.

In bevorzugten Ausführungen werden höchstens 900 g/m³ pastöser Kunststoff aufgetragen. Andererseits sollten pro Quadratmeter wenigstens 700 g des pastösen Kunststoffs aufgetragen werden. Der Kunststoff wird vorzugsweise über die Fläche gleichmäßig aufgebracht. Die Kunststoffmasse wird auf eine Belagdicke von vorzugsweise wenigstens 5.5 mm, bevorzugter wenigstens 5.8 mm aufgeschäumt. Die Porosität ist zumindest überwiegend eine geschlossene Porosität. Die Rezeptur der pastösen Kunststoffmasse und die Parameter des Schäumungsprozesses sind so eingestellt, dass der Kunststoffschaum des fertigen Belags eine Dichte von vorzugsweise wenigstens 0.2 und vorzugsweise höchstens 0.4 g/cm³, besonders bevorzugt 0.3 ± 0.05 g/cm³, aufweist.

Für den Träger wird eine Geometrie bevorzugt, in der die zweiten Fäden, die anschließend in den Verbindungsstegen eingebettet sind, voneinander paarweise jeweils einen Abstand von wenigstens 7 mm und höchstens 14 mm, bevorzugt 9±2 mm, aufweisen. Die Fadengruppen, die das Gerüst für die Raupenstege bilden, je eine Fadengruppe pro Raupensteg, sollten eine Breite von wenigstens 2 mm und höchstens 5 mm haben, bevorzugt weisen sie eine Breite von 3 ± 1 mm auf. Zwischen je zwei benachbarten Fadengruppen sollte ein Abstand verbleiben, der wenigstens 6 mm und höchstens 14 mm beträgt, bevorzugt wird ein Abstand von 9 ± 2 mm.

In Vorserien wurde mit einem Trägergewirk der beschriebenen Geometrie durch Auftragen von pastösem Weich-PVC aus dem Bereich der genannten Flächenbelegung und anschließendem Schäumen und Verfestigen bereits die erfindungsgemäße Noppenstruktur in gleichmäßiger Güte erhalten. Die Noppenstruktur stellt sich bei dem Schäumungsprozess von selbst ein. Obgleich die Formung der Noppenstruktur unmittelbar durch den Schäumungsprozess bevorzugt wird, soll nicht ausgeschlossen werden, dass die Noppenstruktur erst durch einen zusätzlichen Bearbeitungsschritt, beispielsweise einen Prägeprozess, geformt wird. Der vorstehend als optional beschriebene Prägeschritt könnte die Prägung der Noppenstruktur beinhalten, d. h. in solch einer Variante würden die Raupenstege mit der Noppenstruktur und die einzelnen Noppen dieser Noppenstruktur an ihrer Oberfläche mit einem weiteren, feineren Prägemuster geformt werden. In noch einer Variante würden die Noppen zweiter Ordnung und das Prägemuster in getrennten Prägeschritten geformt werden.

Vorteilhafte Merkmale werden auch in den Unteransprüchen und deren Kombinationen beschrieben. Die in den Unteransprüchen beschriebenen Merkmale und die vorstehend beschriebenen ergänzen einander wechselseitig.

Nachfolgend wird ein Ausführungsbeispiel der Erfindung beschrieben. An dem Ausführungsbeispiel offenbar werdende Merkmale bilden je einzeln und in jeder Merkmalskombination die Gegenstände der Ansprüche und auch die vorstehend beschriebenen Ausgestaltungen vorteilhaft weiter. Es zeigen:
- Figur 1: einen erfindungsgemäßen Belag in einer perspektivischen Sicht,
- Figur 2: eine Oberseite des Belags,
- Figur 3: eine Unterseite des Belags,
- Figur 4: die Oberseite in schematischer Darstellung,
- Figur 5: ein Trägergewirk des erfindungsgemäßen Belags und
- Figur 6: ein Trägergewirk eines bereits im Einsatz befindlichen, nicht erfindungsgemäßen Belags.

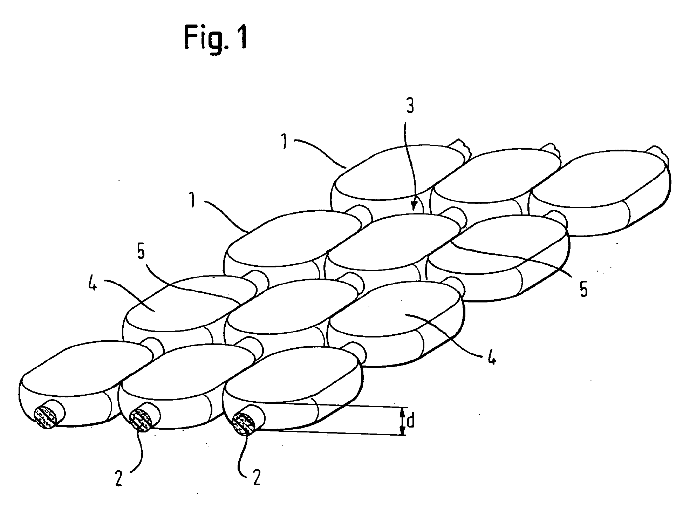

Figur 1 zeigt in perspektivischer Sicht ein Stück eines Belags, beispielsweise einer Bade- oder Duschwanneneinlage. Der Belag ist von gitterförmiger Struktur und besteht aus parallel nebeneinander angeordneten raupenförmigen Stegen 1, die im Folgenden als Raupenstege 1 bezeichnet werden, und ebenfalls parallel voneinander beabstandeten, quer zu den Raupenstegen 1 weisenden Stegen 2, welche die Raupenstege 1 miteinander verbinden und daher im Folgenden als Verbindungsstege 2 bezeichnet werden. Zwischen den Zeilen von Raupenstegen 1 und den dazu rechtwinklig weisenden Reihen von Verbindungsstegen 2 verbleiben Durchbrüche 3, durch die Wasser von der abgebildeten Oberseite des Belags zu dessen Unterseite und auf den die Auflage für den Belag bildenden Boden, beispielsweise die Badewanne oder Duschwanne, abfließen kann.

Der Belag ist ein Verbundkörper und besteht vollständig aus Kunststoff. Ein Trägergewirk aus Polyesterfäden bildet ein Gerüst des Belags. Das Trägergewirk ist in einen umhüllenden Kunststoffschaum, im Ausführungsbeispiel Weich-PVC, eingebettet. Der Kunststoffschaum ist auf eine Dicke d von gut 6 mm, im Ausführungsbeispiel 6.2 mm, geschäumt, wobei die Dicke d als die Dicke der Raupenstege 1 im unverformten Zustand gemessen wird.

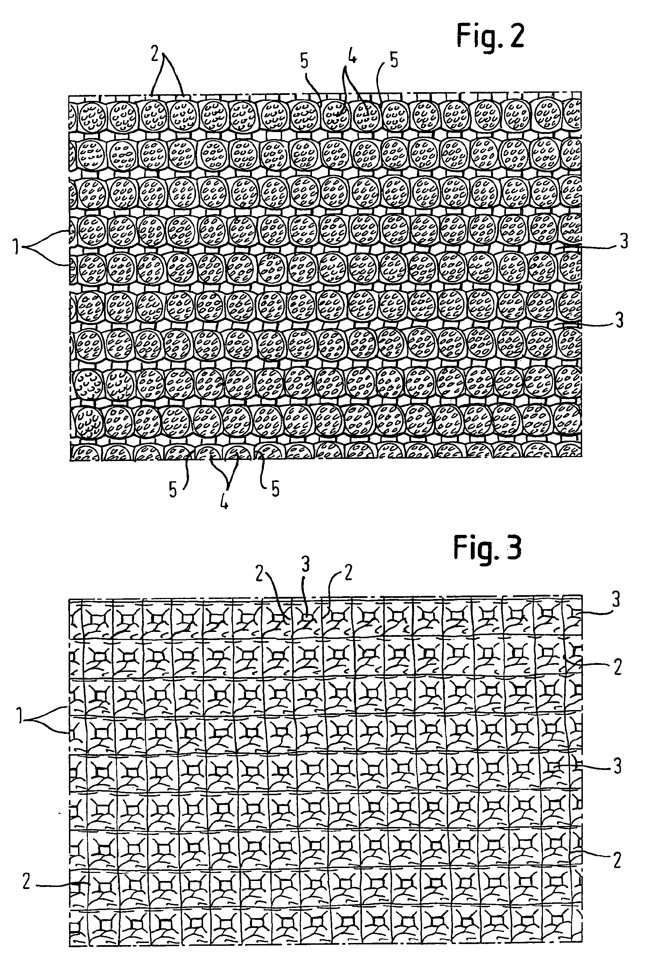

Figur 2 zeigt den Belag in der Draufsicht auf die Oberseite, und Figur 3 zeigt ihn in der Draufsicht auf die Unterseite. Auf der Oberseite weisen die Raupenstege 1 eine ausgeprägte Noppenstruktur auf, die aus längs jedes Raupenstegs 1 perlenartig aneinander gereihten Noppen 4 und die Noppen 4 voneinander trennenden Einschnürungen 5 gebildet wird. Die Noppen 4 ragen aus dem Grund der sie jeweils voneinander trennenden Einschnürungen 5 erhaben auf. Jeder Noppen 4 bildet ein Plateau. In der Draufsicht sind die Noppen 4 oval mit einer zu den Einschnürungen 5 parallelen ersten Hauptachse und einer demgegenüber etwas kürzeren zweiten Hauptachse, die in Längsrichtung des jeweiligen Raupenstegs 1 weist. In der Draufsicht haben die Noppen 4 die Form zweier Kreisbogenabschnitte, die über die Einschnürungen beidseits jeder Noppe 4 miteinander verbunden sind. Die Einschnürungen 5 bilden die langen Seiten der Ovale. Die Einschnürungen 5 erstrecken sich über die gesamte Oberseite der Raupenstege 1 und auch an beiden Seiten bis oder bis nahe zu der Belagunterseite.

Auf den Noppen 4 ist je eine Vielzahl kleinerer Noppen geformt. Diese Feinstruktur kleinerer Noppen wird durch Prägung als Prägestruktur erhalten. Im Ergebnis weist der Belag die Gitterstruktur als eine Struktur erster Ordnung auf, der als Struktur zweiter Ordnung die aus den Noppen 4 und Einschnürungen 5 bestehende Noppenstruktur überlagert ist, deren Noppen 4 wiederum an der Oberseite je durch eine Vielzahl kleinster Noppen nochmals strukturiert sind.

Die in Figur 3 gezeigte Unterseite des Belags weist die ausgeprägte Noppenstruktur 4, 5 der Oberseite nicht auf. Die Raupenstege 1 sind vielmehr unregelmäßig zerklüftet und demgemäß von vielen Furchen durchzogen, zwischen denen wulstartig Kunststoffschaummaterial vorsteht, mit dem der Belag auf der jeweiligen Bodenfläche aufliegt.

Die Verbindungsstege 2 sind im Querschnitt im Wesentlichen kreisrund und schlanker als die Raupenstege 1. Die Verbindungsstege 2 stoßen mittig zwischen je zwei nächstbenachbarten Einschnürungen 5 auf die Raupenstege 1. Die Verbindungsstege 2 sind zwar schlanker als die Raupenstege 1, aber dennoch so füllig, dass der Eindruck eines nahezu vollflächigen Belags, allerdings mit regelmäßigem Muster, entsteht. Die Verbindungsstege 2 treten an der Unterseite und insbesondere an der Oberseite des Belags ein Stück weit hinter den Raupenstegen 1 zurück, so dass die Raupenstege 1 sowohl die Auflagefläche als auch die Tritt-, Sitz- oder Liegefläche des Belags bilden. Die Verbindungsstege 2 können allerdings im praktischen Gebrauch unter dem Gewicht des jeweiligen Benutzers mit der Bodenfläche und auch mit dem Benutzer in Kontakt gelangen. Nicht zuletzt aufgrund der Noppenstruktur 4, 5 mit den erhaben aufragenden Noppen 4 und der damit einhergehenden Verkleinerung der zunächst als Tritt- und Sitzfläche dienenden Oberfläche der Raupenstege 1 werden diese bei Benutzung bei gleicher Last stärker zusammengedrückt als die bekannten Sympa-Nova^{®}-Beläge.

Im Vergleich mit den Sympa-Nova^{®}-Belägen ist der Belag der Erfindung spürbar leichter und weicher. Bei im Wesentlichen gleichem Flächenanteil der Durchbrechungen 3 hat der Sympa-Nova^{®}-Belag eine Flächendichte von 990 g/m² bei einer Dicke von etwa 5,2 mm. Der Belag der Erfindung hat eine Flächendichte von höchstens 950 g/m² bei einer Dicke d von etwa 6,2 mm. Der Belag des Ausführungsbeispiels hat sogar nur eine Flächendichte von 890 g/m². Entsprechend höher ist der Porositätsgrad des Kunststoffschaums.

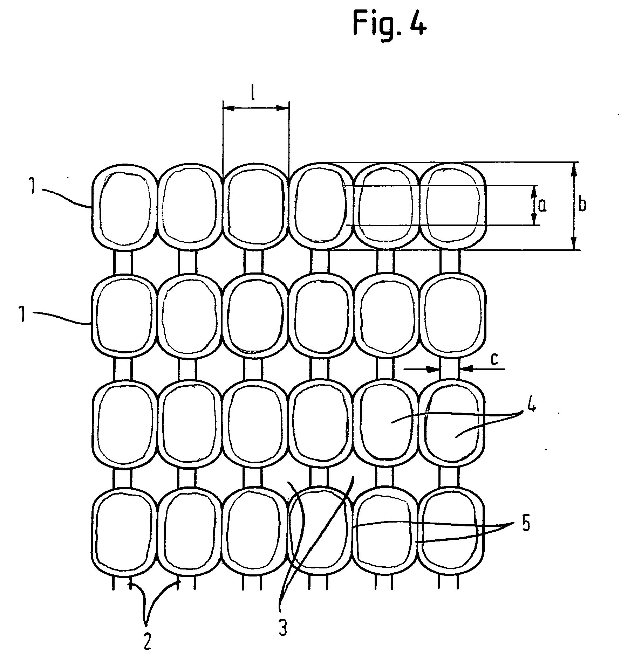

Figur 4 zeigt einen kleinen Ausschnitt der Belagoberseite in einer mehr schematischen Darstellung, die in erster Linie der Illustration bevorzugter Abmessungen dient. Mit 1 ist die in Längsrichtung der Raupenstege 1 gemessene Länge und mit a und b sind zwei charakteristische Breitenmaße der Noppen 4 bezeichnet. Die Länge 1 wird zwischen je zwei nächstbenachbarten Einschnürungen 5 gemessen. Die Breite a ist die kleinste Breite der Noppen 4, nämlich die Breite im Bereich der Einschnürungen 5. Mit b ist die größte Breite der Noppen 4 bezeichnet, die jeweils in der Mitte zwischen zwei nächstbenachbarten Einschnürungen 5 auftritt, wo auch jeweils die zwei Verbindungsstege 2 von jeder Noppe 4 abzweigen. Schließlich bezeichnet c die Dicke, d. h. den Durchmesser, der Verbindungsstege 2. Die Längen- Breiten- und Dickenmaße 1, a, b und c sind jeweils Mittelwerte, gebildet als arithmetische Mittel über wenigstens zehn einzelne Noppen 4, Einschnürungen 5 oder Verbindungsstege 2.

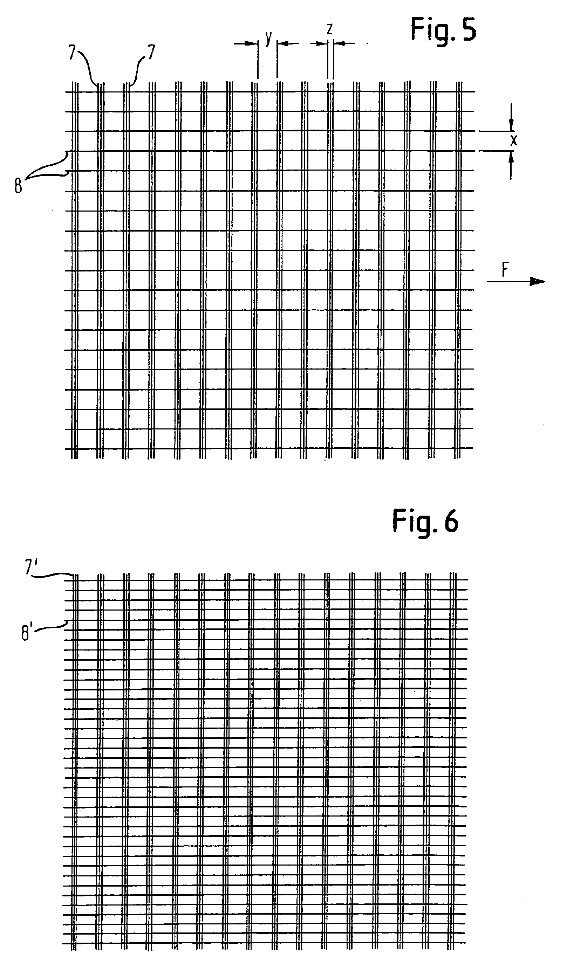

Figur 5 zeigt das eingebettete Trägergewirk. Es besteht aus ersten Fäden 7 und hierzu rechtwinklig verlaufenden zweiten Fäden 8. Die Fäden 7 und 8 sind gleich. Sie bestehen aus Polyester. Die Fäden 7 sind parallel nebeneinander in Zeilen und die Fäden 8 ebenfalls zueinander parallel, aber rechtwinklig zu den Fäden 7, in Reihen angeordnet. In den Kreuzungsbereichen sind die Fäden 7 mit den Fäden 8 vermascht. Während die Fäden 8 einzeln und je im gleichen Abstand x zueinander angeordnet sind, bilden die Fäden 7 Fadengruppen, in denen mehrere Fäden 7 dicht nebeneinander angeordnet sind und zwischen je zwei nächstbenachbarten Fadengruppen ein demgegenüber größerer Abstand y verbleibt. Benachbarte Fadengruppen haben zueinander jeweils den gleichen Abstand y. Jede Fadengruppe besteht aus drei parallel nebeneinander verlaufenden Fäden 7. Die innerhalb der Fadengruppen nächstbenachbarten Fäden 7 weisen zueinander jeweils einen gleichen, gegenüber y deutlich kleineren Abstand auf. Die Breite der Fadengruppen ist mit z bezeichnet.

In der nachfolgenden Tabelle sind für das Gitter 3, 4 und das Trägergewirk 7, 8 bevorzugte Minimal- und Maximalwerte, ferner besonders bevorzugte Wertebereiche und schließlich die Werte des Ausführungsbeispiels angegeben. Die Abmessungen des Belags sind zwar bevorzugt so gewählt, dass zumindest die angegebenen Minimal- und Maximalwerte in der Kombination der Tabelle eingehalten werden, vorteilhaft sind die angegebenen Wertebereiche und Einzelwerte jedoch auch außerhalb der durch die Tabelle repräsentierten Kombination.

| Maß | minimal | maximal | bevorzugt | Ausführungsbeispiel |
|---|---|---|---|---|
| a | 5 | 10 | 8 ± 1 | 8 |
| b | 8 | 15 | 10 ± 2 | 10 |
| c | 3 | 7 | 5 ± 1 | 5 |
| d | 5.5 | 7.5 | 6.2 ± 0.5 | 6.2 |
| l | 7 | 14 | 9 ± 2 | 9 |
| x | 7 | 14 | 9 ± 2 | 9 |
| y | 6 | 14 | 9 ± 2 | 8-9 |
| z | 2 | 5 | 3 ± 1 | 3 |

Figur 6 zeigt zum Vergleich das Trägergewirk der Sympa-Nova^{®}-Beläge. Das Trägergewirk des erfindungsgemäßen Belags unterscheidet sich von dem Trägergewirk der Sympa-Nova^{®}-Beläge nur durch den Abstand x, den die zweiten Fäden 8', die im Belag die Verbindungsstege 2 durchziehen, voneinander aufweisen. Bei dem bekannten Belag der Figur 6 beträgt der Abstand x zwischen 4 und 5 mm. Bei derart geringen Abständen der zweiten Fäden 8' bilden sich im Wesentlichen durchgehend dünne balkenförmige Raupenstege ohne Einschnürungen. Es ist zu vermuten, dass das Kunststoffmaterial an den vergleichsweise eng voneinander beabstandeten Fäden 8' Stütz- oder Verankerungspunkte findet, die beim Schäumen Einschnürungen einer ausgeprägten Form verhindern. Anders ausgedrückt, gehen bei dem erfindungsgemäßen Belag aufgrund des größeren Abstands x die Stütz- oder Verankerungspunkte sozusagen verloren, so dass sich das Kunststoffschaummaterial zwischen zwei benachbarten zweiten Fäden 8 bei dem Schäumen einschnürt. Ein weiterer Einflussfaktor ist die geringere Flächenbelegung des Trägergewirks 7, 8 mit Kunststoffmaterial.

Für die Herstellung des erfindungsgemäßen Belags wird das als Bahnmaterial vorliegende Trägergewirk 7, 8 von einer Rolle abgewickelt und kontinuierlich über eine Auftragswalze, diese teilweise umschlingend, geführt. In Figur 5 ist die bevorzugte Förderrichtung F mit einem Pfeil dargestellt. Mittels einer der Auftragswalze gegenüberliegend angeordneten Auftragseinrichtung wird kontinuierlich pastöses Kunststoffmaterial, das mit Blähmittel und Weichmacher versetzt ist, aufgetragen und mittels einer Rakeleinrichtung dosiert, so dass sich eine Flächenbelegung oder Flächendichte von höchstens 900 g/m², vorzugsweise 800 bis 850 g/m² einstellt. Im Ausführungsbeispiel wird das pastöse Kunststoffmaterial mit einer Flächendichte von 830 g/m² aufgetragen. Der pastöse Kunststoff schlägt durch das Trägergewirk 7, 8 bis auf die Walzenoberfläche und hüllt das Trägergewirk 7, 8 zumindest im Wesentlichen bereits unmittelbar nach dem Auftrag ein. Die Verbundbahn aus Trägergewirk 7, 8 und pastösem Kunststoff wird in einem Gelierofen angeliert und in einem sich anschließenden Schäumungsofen kontrolliert geschäumt. An den Schäumungsofen schließt sich eine Kühlungseinrichtung an, in dem durch Kühlung der Schäumungsprozess kontrolliert abgebrochen und der Kunststoffschaum verfestigt wird. An die Verfestigung schließt sich ein Prägeprozess ebenfalls im kontinuierlichen Durchlauf an. Dabei wird die Oberseite der Bahn durch einen mechanisch aufgebrachten Flächendruck geglättet und mit der aus den feinen Noppen bestehenden Struktur dritter Ordnung versehen. In einem letzten Prozessschritt wird in-line ein die gesamte Oberfläche der Bahn umhüllender Schutzlack aufgebracht. Schließlich wird die Bahn auf Rollen gewickelt. Anzumerken ist noch, dass die Bahn bei dem Herstellungsverfahren mit der Unterseite, die später auch die Unterseite des Belags bildet, die Umfangsfläche der Auftragswalze kontaktiert.

## Patentansprüche

1. Belag in Matten- oder Bahnform, umfassend:
a) einen als Maschenware oder Gewebe gebildeten Träger (7, 8)
b) und den Träger (7, 8) umhüllenden Kunststoffschaum,
c) der Zeilen von raupenförmigen Raupenstegen (1) und quer zu den Zeilen weisende Reihen von schlankeren Verbindungsstegen (2) bildet, zwischen denen Durchbrüche (3) verbleiben,
d) wobei die Raupenstege (1) jeweils zwischen benachbarten Verbindungsstegen (2) eine Einschnürung (5) aufweisen, die sich durchgehend von beiden Seiten über eine Ober- oder Unterseite des jeweiligen Raupenstegs (1) erstreckt.

2. Belag nach Anspruch 1, wobei benachbarte Verbindungsstege (2) voneinander je einen von Stegmitte zu Stegmitte gemessenen Abstand (x) aufweisen, der von einer Breite (b) der Raupenstege (1) um höchstens 30 % abweicht, wobei die Breite (b) der Raupenstege (1) das arithmetische Mittel ist aus einer in Draufsicht des Belags gesehen kleinsten Breite (a), die über die Einschnürungen (5) gemessen wird, und einer größten Breite (b), die jeweils zwischen zwei benachbarten Einschnürungen (5) gemessen wird.

3. Belag nach einem der vorhergehenden Ansprüche, wobei die Raupenstege (1) zwischen benachbarten Einschnürungen (5) in Draufsicht auf den Belag je eine größte Breite (b) aus dem Bereich von 8 bis 15 mm aufweisen.

4. Belag nach einem der vorhergehenden Ansprüche, wobei die Raupenstege (1) in Draufsicht auf den Belag über die Einschnürungen (5) gemessen eine Breite (a) von wenigstens 5 mm und höchstens 10 mm aufweisen.

5. Belag nach einem der vorhergehenden Ansprüche, wobei die Verbindungsstege (2) eine Dicke (c) von wenigstens 3 mm und höchstens 7 mm aufweisen.

6. Belag nach einem der vorhergehenden Ansprüche, wobei die Raupenstege (1) zwischen der Oberseite und einer Unterseite gemessen je eine Dicke (d) von wenigstens 5.5 mm und höchstens 7,5 mm aufweisen.

7. Belag nach einem der vorhergehenden Ansprüche, wobei die Raupenstege (1) in Draufsicht auf den Belag in alternierender Abfolge aus den Einschnürungen (5) und zwischen den Einschnürungen (5) erhaben aufragenden Noppen (4) bestehen.

8. Belag nach dem vorhergehenden Anspruch, wobei die Noppen (4) in Längsrichtung der Raupenstege (1) schmaler als in Querrichtung sind.

9. Belag nach einem der zwei vorhergehenden Ansprüche, wobei die Noppen (4) in Längsrichtung der Raupenstege (1) gemessen von Einschnürung (5) zu Einschnürung (5) eine Länge (1) von wenigstens 7 mm und höchstens 14 mm aufweisen.

10. Belag nach einem der vorhergehenden Ansprüche, wobei der Kunststoffschaum auf die Fläche des Belags bezogen eine gleichmäßige Flächendichte von wenigstens 700 g/m² und höchstens 900 g/m² aufweist.

11. Belag nach einem der vorhergehenden Ansprüche, wobei der Kunststoffschaum eine Dichte von wenigstens 0.2 und höchstens 0.4 g/cm³ aufweist.

12. Belag nach einem der vorhergehenden Ansprüche, wobei der Kunststoffschaum einen Weichmacheranteil von wenigstens 32 und höchstens 35 Gew.-% aufweist.

13. Belag nach einem der vorhergehenden Ansprüche, wobei der Kunststoffschaum ein Kunststoffmaterial in einem Anteil von wenigstens 40 Gew.-%, vorzugsweise wenigstens 45 Gew.-%, beinhaltet.

14. Belag nach einem der vorhergehenden Ansprüche, wobei der Kunststoffschaum höchstens 20 Gew.-%, vorzugsweise höchstens 17 Gew.-% Füllstoff beinhaltet.

15. Belag nach einem der vorhergehenden Ansprüche, wobei der Träger (7, 8) aus Zeilen von die Raupenstege (1) in Längsrichtung durchziehenden ersten Fäden (7) und aus Reihen von die Verbindungsstege (2) durchziehenden zweiten Fäden (8) gebildet ist und benachbarte zweite Fäden (8) voneinander je einen Abstand (x) von wenigstens 7 mm und höchstens 14 mm aufweisen.

16. Belag nach einem der vorhergehenden Ansprüche, wobei der Träger (7, 8) aus Zeilen von ersten Fäden (7) und Reihen von zweiten Fäden (8) gebildet ist und die ersten Fäden (7) in Fadengruppen (7) angeordnet sind, wobei die Abstände benachbarter Fäden (7) innerhalb der Fadengruppen (7) kleiner sind als die Abstände (y) zwischen den Fadengruppen (7) und wobei die Fadengruppen (7) die Raupenstege (1) und die zweiten Fäden (8) die Verbindungsstege (2) in Längsrichtung durchziehen.

17. Verfahren nach dem vorhergehenden Anspruch, wobei benachbarte Fadengruppen (7) voneinander einen Abstand y und benachbarte zweite Fäden (8) voneinander einen Abstand x aufweisen und 0,7 ≤ x/y ≤ 1,3.

18. Verfahren zur Herstellung eines matten- oder bahnförmigen Belags, bei dem
a) auf einen als Maschenware oder Gewebe gebildeten Träger (7, 8) aus Zeilen von in Fadengruppen angeordneten ersten Fäden (7) und Reihen von zweiten Fäden (8)
b) eine Blähmittel enthaltende Kunststoffpaste aufgebracht
c) und geschäumt wird,
d) wobei jeweils benachbarte zweite Fäden (8) voneinander einen Abstand (x) von wenigstens 7 mm und höchstens 14 mm haben.

19. Verfahren nach dem vorhergehenden Anspruch, bei dem pro Quadratmeter des Trägers (7, 8) gleichmäßig wenigstens 700 g und höchstens 900 g der Kunststoffpaste aufgebracht werden.

20. Verfahren nach einem der vorhergehenden Ansprüche, wobei der Schäumungsprozess der Kunststoffpaste bei Erreichen einer Dicke (d) von wenigstens 5.5 mm, vorzugsweise wenigstens 5,8 mm, und vorzugsweise höchstens 7,5 mm abgebrochen wird.

21. Verfahren nach einem der vorhergehenden Ansprüche, bei dem die Kunststoffpaste kontinuierlich und gleichmäßig auf den kontinuierlich als Bahnware geförderten Träger (7, 8) aufgebracht und anschließend die aus dem Träger (7, 8) und der Kunststoffpaste bestehende Bahn ebenfalls kontinuierlich in-line bis auf Schäumungstemperatur erwärmt, die Kunststoffpaste geschäumt und durch kontrollierten Abbruch des Schäumungsprozesses verfestigt wird.
